# EUROPEAN PATENT APPLICATION

(11) **EP 4 290 956 A1**
(43) Date of publication of application: **13.12.2023**
(21) Application number: 22749685.8
(22) Date of filing: 01.02.2022
(51) Int. Cl.: H04W 72/04, H04W 72/12, H04W 28/18

(54) **TERMINAL, WIRELESS COMMUNICATION METHOD, AND BASE STATION**

(30) Priority: 04.02.2021 JP 2021016826
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/003716
(87) International publication number: WO 2022/168813

(57) **Abstract**

A terminal according to one aspect of the present disclosure includes a receiving section that receives downlink control information to schedule a physical downlink shared channel, and a control section that determines, on the basis of the downlink control information, which of a repetition scheme and a scheme for high-speed movement is applied to the physical downlink shared channel. According to one aspect of the present disclosure, it is possible to appropriately receive downlink signals from a plurality of transmission points.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), it is assumed that in order to achieve radio communication in a moving object (for example, a train or the like) moving at a high speed, a beam transmitted from a transmission point (for example, a Remote Radio Head (RRH)) arranged on a path of the moving object is used.

However, how a terminal receives downlink signals transmitted from a plurality of transmission points has not been fully studied. Unless such operation is definite, throughput reduction or the like may occur.

Thus, an object of the present disclosure is to provide a terminal, a radio communication method, and a base station that appropriately receive downlink signals from a plurality of transmission points.

### Solution to Problem

A terminal according to one aspect of the present disclosure includes a receiving section that receives downlink control information to schedule a physical downlink shared channel, and a control section that determines, on the basis of the downlink control information, which of a repetition scheme and a scheme for high-speed movement is applied to the physical downlink shared channel.

### Advantageous Effects of Invention

According to one aspect of the present disclosure, it is possible to appropriately receive downlink signals from a plurality of transmission points.

### Brief Description of Drawings

FIGS. 1A and 1B are each a diagram to show an example of communication between a moving object and a transmission point (for example, an RRH);
FIGS. 2A to 2C are diagrams to show an example of scheme 0 to scheme 2 related to an SFN;
FIGS. 3A and 3B are diagrams to show an example of scheme 1;
FIGS. 4A to 4C are diagrams to show an example of an NW pre-compensation scheme;
FIG. 5 is a diagram to show an example of aspect 1-1;
FIG. 6 is a diagram to show a variation of aspect 1-3;
FIG. 7 is a diagram to show an example of a second embodiment;
FIGS. 8A and 8B are each a diagram to show an example of a Doppler shift of a DL receive signal according to the second embodiment;
FIG. 9 is a diagram to show an example of aspect 3-1;
FIGS. 10A and 10B are diagrams to show an example of a fourth embodiment;
FIGS. 11A and 11B are diagrams to show an example of repetition scheme 1a and HST scheme 1;
FIGS. 12A and 12B are diagrams to show an example of aspect 5-1;
FIGS. 13A to 13C are diagrams to show an example of a TCI state in an HST NW pre-compensation scheme;
FIGS. 14A and 14B are diagrams to show an example of aspect 5-2;
FIG. 15 is a diagram to show an example of aspect 6-3;
FIG. 16 is a diagram to show an example of a schematic structure of a radio communication system according to one embodiment;
FIG. 17 is a diagram to show an example of a structure of a base station according to one embodiment;
FIG. 18 is a diagram to show an example of a structure of a user terminal according to one embodiment; and
FIG. 19 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a measurement reference signal (Sounding Reference Signal (SRS)), a CSI-RS for tracking (also referred to as a Tracking Reference Signal (TRS)), and a reference signal for QCL detection (also referred to as a QRS) .

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS being in a relationship of QCL type X with a (DMRS for) certain channel/signal, and this RS may be referred to as a QCL source of QCL type X in the TCI state.

### (Default TCI State/Default Spatial Relation/Default PL-RS)

In an RRC connected mode, in both a case where information of TCI in DCI (higher layer parameter TCI-PresentInDCI) is set to "enabled" and a case where the information of TCI in DCI is not configured, when time offset between reception of DL DCI (DCI to schedule a PDSCH) and a corresponding PDSCH (PDSCH scheduled by the DCI) is less than a threshold value (timeDurationForQCL) (application condition, first condition), in a case of non-cross carrier scheduling, a TCI state (default TCI state) for the PDSCH may be a TCI state with the lowest CORESET ID in the latest slot in an active DL BWP for that CC (for a specific UL signal). In cases other than the case, the TCI state (default TCI state) for the PDSCH may be a TCI state with the lowest TCI state ID of a PDSCH in an active DL BWP for a scheduled CC.

In Rel. 15, individual MAC CEs for a MAC CE for PUCCH spatial relation activation/deactivation and a MAC CE for SRS spatial relation activation/deactivation are necessary. A PUSCH spatial relation follows the SRS spatial relation.

In Rel. 16, at least one of the MAC CE for PUCCH spatial relation activation/deactivation and the MAC CE for SRS spatial relation activation/deactivation may not be used.

If both a spatial relation and a PL-RS for the PUCCH are not configured in FR2 (application condition, second condition), a default assumption for the spatial relation and PL-RS (default spatial relation and default PL-RS) is applied to the PUCCH. If both a spatial relation and a PL-RS for the SRS (SRS resource for the SRS or SRS resource corresponding to SRI in DCI format 0_1 to schedule a PUSCH) are not configured in FR2 (application condition, second condition), a default assumption for the spatial relation and PL-RS (default spatial relation and default PL-RS) is applied to the PUSCH scheduled by DCI format 0_1 and the SRS.

If CORESETs are configured in an active DL BWP on that CC (application condition), the default spatial relation and default PL-RS may be a TCI state or QCL assumption for a CORESET having the lowest CORESET ID in the active DL BWP. If CORESETs are not configured in an active DL BWP on that CC, the default spatial relation and default PL-RS may be an active TCI state having the lowest ID for a PDSCH in the active DL BWP.

In Rel. 15, a spatial relation for a PUSCH scheduled by DCI format 0_0 follows a spatial relation for a PUCCH resource having the lowest PUCCH resource ID out of active spatial relations for a PUCCH on the same CC. A network needs to update PUCCH spatial relations on all SCells even when the PUCCH is not transmitted on the SCell.

In Rel. 16, PUCCH configuration for a PUSCH scheduled by DCI format 0_0 is unnecessary. When an active PUCCH spatial relation or a PUCCH resource for a PUSCH scheduled by DCI format 0_0 is absent on an active UL BWP in that CC (application condition, second condition), the default spatial relation and default PL-RS are applied to the PUSCH.

A condition for application of a default spatial relation/default PL-RS for the SRS may include a case that an information element for enabling a default beam pathloss for the SRS (higher layer parameter enableDefaultBeamPlForSRS) is set to "enabled." A condition for application of a default spatial relation/default PL-RS for the PUCCH may include a case that an information element for enabling a default beam pathloss for the PUCCH (higher layer parameter enableDefaultBeamPlForPUCCH) is set to "enabled." A condition for application of the default spatial relation/default PL-RS for the PUSCH scheduled by DCI format 0_0 may include a case that an information element for enabling a default beam pathloss for the PUSCH scheduled by DCI format 0_0 (higher layer parameter enableDefaultBeamPlForPUSCH0_0) is set to "enabled."

The above-described threshold value may be referred to as a time length (time duration) for QCL, "timeDurationForQCL," "Threshold," "Threshold for offset between a DCI indicating a TCI state and a PDSCH scheduled by the DCI," "Threshold-Sched-Offset," a schedule offset threshold value, a scheduling offset threshold value, or the like.

When offset between reception of the DL DCI and a PDSCH corresponding to that is less than the threshold value timeDurationForQCL, at least one TCI state configured for a serving cell with a scheduled PDSCH includes "QCL type D," a parameter for enabling two default TCIs (enableTwoDefaultTCIStates-r16) is configured for the UE, and at least one TCI codepoint indicates two TCI states, the UE assumes that a DMRS port for a PDSCH or PDSCH transmission occasion in the serving cell is QCLed (quasi colocated) with an RS related to a QCL parameter associated with two TCI states corresponding to the lowest codepoint out of TCI codepoints including two different TCI states. The parameter for enabling two default TCIs indicates that Rel. 16 operation in two default TCI states for a PDSCH in a case where at least one TCI codepoint is mapped to two TCI states is enabled.

### (Multiple TRPs)

For NR, one or a plurality of transmission/reception points (TRPs) (multiple TRPs (multi TRP (MTRP))) that perform DL transmission to a UE by using one or a plurality of panels (multiple panels) are under study. The UE that performs UL transmission to one or the plurality of TRPs by using one or a plurality of panels is under study.

Note that the plurality of TRPs may correspond to the same cell identifier (ID), or may correspond to different cell IDs. The cell ID may be a physical cell ID, or may be a virtual cell ID.

The multiple TRPs (for example, TRP #1 and TRP #2) may be connected to each other by an ideal/non-ideal backhaul, and information, data, and the like may be exchanged. From respective TRPs of the multiple TRPs, different codewords (Code Word (CWs)) and different layers may be transmitted. As a form of multi-TRP transmission, non-coherent joint transmission (NCJT) may be used.

In the NCJT, for example, TRP #1 performs modulation mapping for a first codeword to transmit a first number of layers (for example, 2 layers) by performing layer mapping and to transmit a first PDSCH by using first precoding. TRP #2 performs modulation mapping for a second codeword to transmit a second number of layers (for example, 2 layers) by performing layer mapping and to transmit a second PDSCH by using second precoding.

Note that a plurality of PDSCHs (multiple PDSCHs) subject to the NCJT may be defined as PDSCHs partially or fully overlapping with each other in relation to at least one of time and frequency domains. That is, a first PDSCH from a first TRP and a second PDSCH from a second TRP may overlap with each other in at least one of time and frequency resources.

It may be assumed that these first PDSCH and second PDSCH are not in a quasi-co-location (QCL) relationship (not quasi-co-located). Reception of the multiple PDSCHs may be interpreted as simultaneous reception of PDSCHs other than a certain QCL type (for example, QCL type D).

A plurality of PDSCHs (which may be referred to as multiple PDSCHs) from multiple TRPs may be scheduled by using one piece of DCI (single DCI, single PDCCH) (single master mode, multiple TRPs based on single DCI (single-DCI based multi-TRP)). A respective plurality of PDSCHs from multiple TRPs may be scheduled by using a plurality of pieces of DCI (multiple DCI, multiple PDCCHs) (multimaster mode, multiple TRPs based on multiple DCI (multi-DCI based multi-TRP)).

For Ultra-Reliable and Low Latency Communications (URLLC) for multiple TRPs, support for repetition of a PDSCH (transport block (TB) or codeword (CW)) across the multiple TRPs is under study. Support for repetition schemes (URLLC schemes, reliability enhancement schemes, for example, schemes 1a, 2a, 2b, 3, and 4) across the multiple TRPs on a frequency domain, a layer (spatial) domain, or a time domain is under study. In scheme 1a, multiple PDSCHs from the multiple TRPs are space division multiplexed (SDMed). In schemes 2a and 2b, PDSCHs from the multiple TRPs are frequency division multiplexed (FDMed). In scheme 2a, redundancy versions (RVs) for the multiple TRPs are the same. In scheme 2b, the RVs for the multiple TRPs may be the same, or may be different from each other. In schemes 3 and 4, multiple PDSCHs from the multiple TRPs are time division multiplexed (TDMed). In scheme 3, the multiple PDSCHs from the multiple TRPs are transmitted in one slot. In scheme 4, the multiple PDSCHs from the multiple TRPs are transmitted in different slots.

According to such a multi-TRP scenario, more flexible transmission control using a channel with satisfactory quality is possible.

In order to support intra-cell (having the same cell ID) and inter-cell (having different cell IDs) multi-TRP transmissions based on multiple PDCCHs, in RRC configuration information for linking a plurality of pairs of PDCCHs and PDSCHs having multiple TRPs, one control resource set (CORESET) in PDCCH configuration information (PDCCH-Config) may correspond to one TRP.

The UE may judge that the multiple TRPs are multiple TRPs based on multiple DCI when at least one of the following condition 1 and condition 2 is satisfied. In this case, the TRPs may be interpreted as CORESET pool indexes.
[Condition 1]
   One CORESET pool index is configured.
[Condition 2]
   Two different values (for example, 0 and 1) of CORESET pool indexes are configured.

The UE may judge that the multiple TRPs are multiple TRPs based on single DCI when the following condition is satisfied. In this case, two TRPs may be interpreted as two TCI states indicated by a MAC CE/DCI.

### [Condition]

In order to indicate one or two TCI states for one codepoint of a TCI field in DCI, a "MAC CE for enhanced TCI state activation/deactivation for a UE-specific PDSCH (Enhanced TCI states Activation/Deactivation for UE-specific PDSCH MAC CE)" is used.

DCI for common beam indication may be a UE-specific DCI format (for example, DL DCI format (for example, 1_1 or 1_2) or UL DCI format (for example, 0_1 or 0_2)), or may be a UE-group common DCI format.

### (HST)

In LTE, arrangement in an HST tunnel is difficult. A large antenna performs transmission outside/inside of the tunnel. For example, transmit power of the large antenna is about 1 to 5 W. For handover, it is important for the UE to perform transmission outside of the tunnel before entering the tunnel. For example, transmit power of a small antenna is about 250 mW. A plurality of small antennas (transmission/reception points) having the same cell ID and having a distance of 300 m form a single frequency network (SFN). All small antennas in the SFN transmit the same signal at the same time on the same PRB. Assume that a terminal performs transmission/reception for one base station. Actually, the plurality of transmission/reception points transmit identical DL signals. In high-speed movement, transmission/reception points in units of several km form one cell. The handover is performed when the cell is crossed. Therefore, frequency of handovers can be reduced.

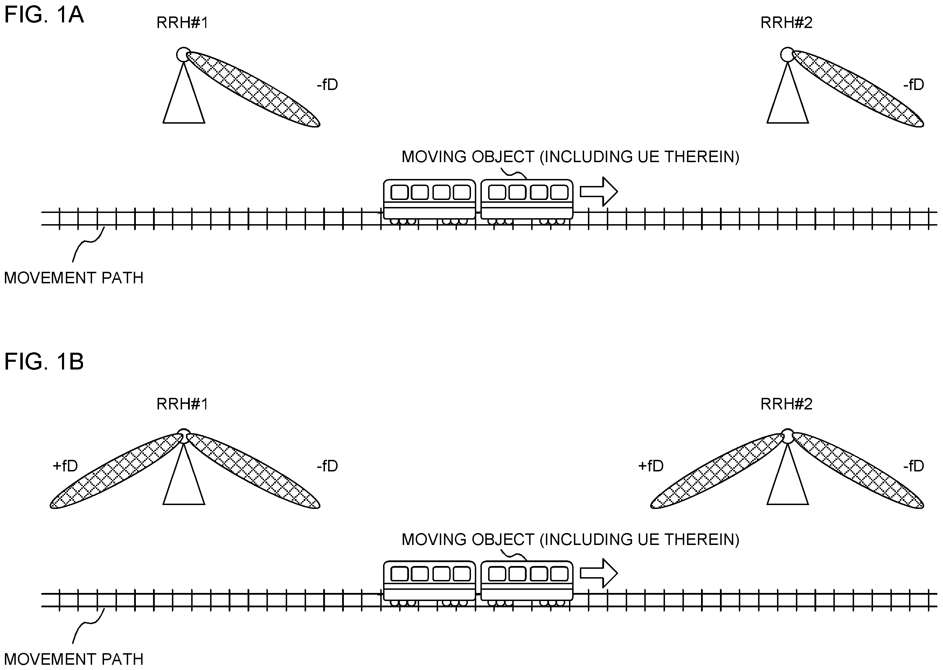

In NR, it is assumed that in order to perform communication with a terminal (also described hereinafter as a UE) included in a moving object, such as a train moving at a high speed (HST (high speed train)), a beam transmitted from a transmission point (for example, an RRH) is used. In existing systems (for example, Rel. 15), communication with the moving object performed by transmitting a uni-directional beam from the RRH is supported (see FIG. 1A).

FIG. 1A shows a case where RRHs are installed along a movement path (or direction of movement, direction of travel, travel path) of the moving object, and a beam is formed from each RRH towards the direction of travel of the moving object. An RRH to form a uni-directional beam may be referred to as a uni-directional RRH. In an example shown in FIG. 1A, the moving object receives a minus Doppler shift (-f_{D}) from each RRH.

Note that FIG. 1A shows a case where the beam is formed towards the direction of travel of the moving object, but is not limited to this, and the beam may be formed towards a direction opposite to the direction of travel, or the beam may be formed towards any direction regardless of the direction of travel of the moving object.

In Rel. 16 (or later versions), it is also assumed that a plurality of (for example, two or more) beams are transmitted from the RRH. For example, it is assumed that beams are formed towards both a direction of travel of the moving object and the opposite direction (see FIG. 1B).

FIG. 1B shows a case where RRHs are installed along a movement path of the moving object, and beams are formed from each RRH towards both a direction of travel of the moving object and a direction opposite to the direction of travel. An RRH to form a multi-directional (for example, bidirectional) beam may be referred to as a bi-directional RRH.

In the HST, the UE performs communication in a manner similar to that of a single TRP. In implementation of a base station, transmission from a plurality of TRPs (same cell ID) can be performed.

In an example of FIG. 1B, when two RRHs (here, RRH #1 and RRH #2) use the SFN, a signal in which the moving object receives a minus Doppler shift in the middle of the two RRHs is switched to a signal in which the moving object receives a plus Doppler shift with higher power in the middle of the two RRHs. In this case, a maximum width of Doppler shift change requiring compensation is a change from - f_{D} to + f_{D}, and doubles as compared to that of the uni-directional RRH.

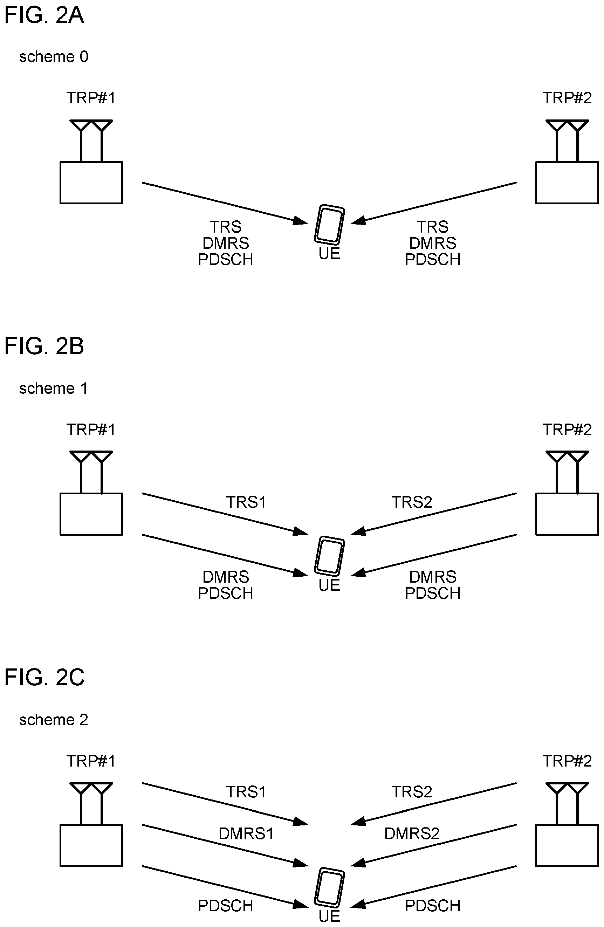

Here, as schemes for the HST, scheme 0 to scheme 2 below (HST scheme 0 to HST scheme 2) are compared to each other. In scheme 0 of FIG. 2A, tracking reference signals (TRSs), DMRSs, and PDSCHs are transmitted in common with two TRPs (RRHs) (by using the same time resource and the same frequency resource) (normal SFN, transparent SFN, HST-SFN). In scheme 1 of FIG. 2B, TRSs are transmitted in a TRP-specific manner (by TRPs using different time/frequency resources). In this example, TRS 1 is transmitted from TRP #1, and TRS 2 is transmitted from TRP #2. In scheme 2 of FIG. 2C, TRSs and DMRSs are transmitted in a TRP-specific manner. In this example, TRS 1 and DMRS 1 are transmitted from TRP #1, and TRS 2 and DMRS 2 are transmitted from TRP #2. Scheme 1 and scheme 2 can suppress a quick change of Doppler shift and can appropriately estimate/assure the Doppler shift, as compared to scheme 0. Since DMRSs of scheme 2 are greater than DMRSs of scheme 1, maximum throughput of scheme 2 is lower than that of scheme 1.

In scheme 0, the UE switches between the single TRP and the SFN on the basis of higher layer signaling (RRC information element/MAC CE) .

The UE may switch between scheme 1/scheme 2/NW pre-compensation scheme on the basis of the higher layer signaling (RRC information element/MAC CE).

In scheme 1, two TRS resources are configured for respective a direction of travel of the HST and the opposite direction.

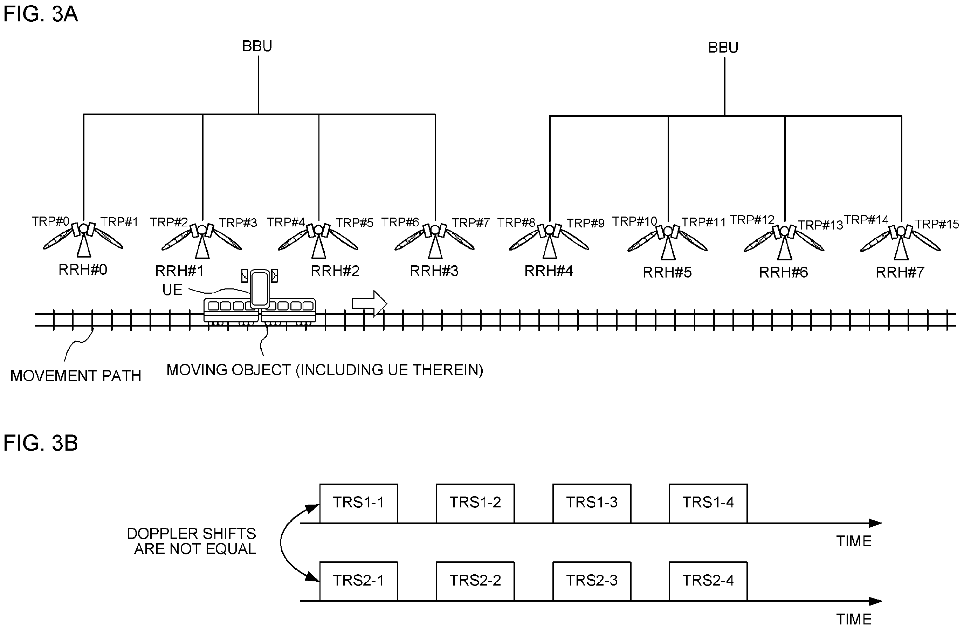

In an example of FIG. 3A, TRPs (TRP #0, TRP #2, ...) to transmit DL signals to the opposite direction of the HST transmit first TRSs (TRSs that arrive from the front of the HST) in an identical time and frequency resource (SFN). TRPs (TRP #1, TRP #3, ...) to transmit DL signals to the direction of travel of the HST transmit second TRSs (TRSs that arrive from the back of the HST) in an identical time and frequency resource (SFN). The first TRSs and second TRSs may be transmitted/received by using mutually different frequency resources.

In an example of FIG. 3B, TRS 1-1 to TRS 1-4 are transmitted as the first TRSs, TRS 2-1 to TRS 2-4 are transmitted as the second TRSs.

Considering beam management, the first TRSs are transmitted by using 64 beams and 64 time resources, and the second TRSs are transmitted by using 64 beams and 64 time resources. It is conceivable that beams of the first TRSs and beams of the second TRSs are equal (QCL type D RSs are equal). Multiplexing the first TRSs and the second TRSs in an identical time resource and different frequency resources can enhance efficiency in resource usage.

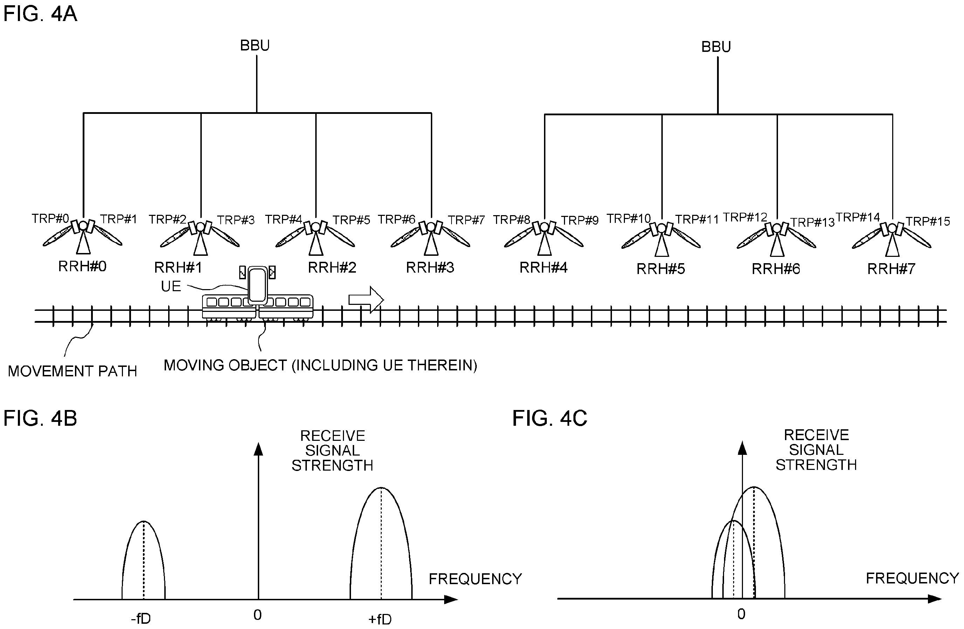

In an example of FIG. 4A, RRH #0 to RRH #7 are arranged along a movement path of the HST. RRH #0 to RRH #3 and RRH #4 to RRH #7 are connected to base band unit (BBU) #0 and BBU #1, respectively. Each RRH is a bi-directional RRH, and forms beams towards both a direction of travel of the movement path and the opposite direction by using each transmission/reception point (TRP).

In a receive signal of an example of FIG. 4B (single TRP (SFN)/scheme 1), when the UE receives a signal/channel transmitted from TRP #2n-1 (n is an integer being 0 or more) (beam in the direction of travel of the HST, beam from behind the UE), a minus Doppler shift (in this example, - fD) occurs. When the UE receives a signal/channel transmitted from TRP #2n (n is an integer being 0 or more) (beam in a direction opposite to the direction of travel of the HST, beam from in front of the UE), a plus Doppler shift (in this example, + fD) occurs.

For Rel. 17 (or later versions), Doppler shift compensation (which may be referred to as Doppler compensation, pre-Doppler compensation, or network (NW) pre-compensation scheme (HST NW pre-compensation scheme)) in downlink (DL) signal/channel transmission from a TRP to a UE in an HST is under study. When performing DL signal/channel transmission to the UE, the TRP can reduce the influence of Doppler shift in DL signal/channel reception in the UE by performing the Doppler compensation beforehand. In the present disclosure, the NW pre-compensation scheme may be a combination of scheme 1 and Doppler shift pre-compensation by the base station.

In the NW pre-compensation scheme, a TRP to form a beam towards the direction of travel of the movement path and a TRP to form a beam towards a direction opposite to the direction of travel of the movement path perform DL signal/channel transmission to the UE in the HST after performing Doppler compensation. In this example, TRP #2n-1 performs plus Doppler compensation and TRP #2n performs minus Doppler compensation to reduce the influence of Doppler shift in signal/channel reception in the UE (FIG. 4C).

### (Analysis)

A UE of Rel. 15/16 does not support an HST function (Rel. 17 (or later versions)), and thus the base station constructs a cell in accordance with an SFN of Rel. 15. A UE of new release (Rel. 17 (or later versions)) supports the HST function when the UE has reported a UE capability to support the HST function, and thus the base station constructs a cell in accordance with the HST function. However, a case where the base station fails to construct an appropriate cell for the UE is conceivable. Unless the appropriate cell is constructed for the UE, degradation in communication performance, such as throughput reduction, may occur.

Thus, the inventors of the present invention came up with the idea of a method for switching between an SFN (Rel. 15) and an HST.

It is preferable that a base station can dynamically switch between a Rel. 15 SFN and an HST (HST scheme) for new release.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, a sequence, a list, a set, a group, a cluster, a sub-set, and the like may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), an RRC message, and configuration may be interchangeably interpreted.

The MAC signaling may use, for example, a MAC control element (MAC CE), a MAC Protocol Data Unit (PDU), or the like. In the present disclosure, a MAC CE, an update command, and an activation/deactivation command may be interchangeably interpreted.

The broadcast information may be, for example, a master information block (MIB), a system information block (SIB), minimum system information (Remaining Minimum System Information (RMSI), SIB 1), other system information (OSI), or the like.

In the present disclosure, a beam, a spatial domain filter, a spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state/QCL assumption, an RS of QCL type A in a TCI state/QCL assumption, a spatial relation, a spatial domain transmission filter, a UE spatial domain transmission filter, a UE transmit beam, a UL beam, a UL transmit beam, UL precoding, a UL precoder, and a PL-RS may be interchangeably interpreted. In the present disclosure, a QCL type X-RS, a DL-RS associated with QCL type X, and a DL-RS, a DL-RS source, an SSB, a CSI-RS, or an SRS having QCL type X may be interchangeably interpreted.

In the present disclosure, a panel, an Uplink (UL) transmission entity, a TRP, a spatial relation, a control resource set (COntrol REsource SET (CORESET)), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (multi-input multioutput (MIMO) layer, transmission layer, spatial layer) may be interchangeably interpreted. A panel Identifier (ID) and a panel may be interchangeably interpreted. In the present disclosure, a TRP ID and a TRP may be interchangeably interpreted.

The panel may relate to at least one of a group index of an SSB/CSI-RS group, a group index of a group-based beam report, and a group index of an SSB/CSI-RS group for a group-based beam report.

A panel Identifier (ID) and a panel may be interchangeably interpreted. That is, a TRP ID and a TRP, a CORESET group ID and a CORESET group, and the like may each be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, it may be assumed that a single PDCCH (DCI) is supported in a case where multiple TRPs use an ideal backhaul. It may be assumed that multiple PDCCHs (DCI) are supported in a case where a non-ideal backhaul is used between multiple TRPs.

Note that the ideal backhaul may be referred to as DMRS port group type 1, reference signal-related group type 1, antenna port group type 1, CORESET pool type 1, or the like. The non-ideal backhaul may be referred to as DMRS port group type 2, reference signal-related group type 2, antenna port group type 2, CORESET pool type 2, or the like. The names of the ideal backhaul and non-ideal backhaul are not limited to these.

In the present disclosure, a single TRP, a single-TRP system, single-TRP transmission, and a single PDSCH may be interchangeably interpreted. In the present disclosure, multiple TRPs, a multi-TRP system, multi-TRP transmission, and multiple PDSCHs may be interchangeably interpreted. In the present disclosure, single DCI, a single PDCCH, multiple TRPs based on single DCI, and activation of two TCI states on at least one TCI codepoint may be interchangeably interpreted.

In the present disclosure, a single TRP, a channel using a single TRP, a channel using one TCI state/spatial relation, a case that multiple TRPs are not enabled by RRC/DCI, a case that a plurality of TCI states/spatial relations are not enabled by RRC/DCI, and a case that one CORESET pool index (CORESETPoolIndex) value is not configured for any CORESET, and any codepoint of a TCI field is not mapped to two TCI states may be interchangeably interpreted.

In the present disclosure, multiple TRPs, a channel using multiple TRPs, a channel using a plurality of TCI states/spatial relations, a case that multiple TRPs are enabled by RRC/DCI, a case that a plurality of TCI states/spatial relations are enabled by RRC/DCI, and at least one of multiple TRPs based on single DCI and multiple TRPs based on multiple DCI may be interchangeably interpreted. In the present disclosure, multiple TRPs based on multiple DCI and a case that one CORESET pool index (CORESETPoolIndex) value is configured for a CORESET may be interchangeably interpreted. In the present disclosure, multiple TRPs based on single DCI and a case that at least one codepoint of a TCI field is mapped to two TCI states may be interchangeably interpreted.

In the present disclosure, TRP #1 (first TRP) may correspond to CORESET pool index = 0, or may correspond to the first TCI state out of two TCI states corresponding to one codepoint of a TCI field. TRP #2 (second TRP) TRP #1 (first TRP) may correspond to CORESET pool index = 1, or may correspond to the second TCI state out of two TCI states corresponding to one codepoint of the TCI field.

In the present disclosure, single DCI (sDCI), a single PDCCH, a multi-TRP system based on single DCI, sDCI-based MTRP, and activation of two TCI states on at least one TCI codepoint may be interchangeably interpreted.

In the present disclosure, multiple DCI (mDCI), multiple PDCCHs, a multi-TRP system based on multiple DCI, mDCI-based MTRP, and a case that two CORESET pool indexes or CORESET pool index = 1 (or one or more values) is configured may be interchangeably interpreted.

QCL of the present disclosure and QCL type D may be interchangeably interpreted.

"TCI state A is same QCL type D as TCI state B," "TCI state A is the same as TCI state B," "TCI state A is QCL type D in relation to TCI state B," and the like in the present disclosure may be interchangeably interpreted.

In the present disclosure, a DMRS, a DMRS port, and an antenna port may be interchangeably interpreted.

In the present disclosure, a CSI-RS, an NZP-CSI-RS, a periodic (P)-CSI-RS, a P-TRS, a semi-persistent (SP)-CSI-RS, an aperiodic (A)-CSI-RS, a TRS, a CSI-RS for tracking, a CSI-RS having TRS information (higher layer parameter trs-Info), an NZP CSI-RS resource in an NZP CSI-RS resource set having TRS information, an NZP-CSI-RS resource in an NZP-CSI-RS resource set constituted by a plurality of NZP-CSI-RS resources for the same antenna port, and a TRS resource may be interchangeably interpreted. In the present disclosure, a CSI-RS resource, a CSI-RS resource set, a CSI-RS resource group, and an information element (IE) may be interchangeably interpreted.

In the present disclosure, a codepoint of a DCI field 'Transmission Configuration Indication,' a TCI codepoint, a DCI codepoint, and a codepoint of a TCI field may be interchangeably interpreted.

In the present disclosure, a single TRP and an SFN may be interchangeably interpreted. In the present disclosure, an HST, an HST scheme, a scheme for high-speed movement, scheme 1, scheme 2, an NW pre-compensation scheme, HST scheme 1, HST scheme 2, and an HST NW pre-compensation scheme may be interchangeably interpreted.

In the present disclosure, a repetition scheme, scheme 1a, repetition scheme 1a, URLLC scheme 1a, reliability enhancement scheme 1a, an SDM scheme, and an SDM repetition scheme may be interchangeably interpreted.

### (Radio Communication Method)

### <First Embodiment>

Dynamic switching between a single TRP (SFN) and an HST scheme (HST scheme 1/HST scheme 2/HST NW pre-compensation scheme) may be performed.

A case where a first embodiment is employed in HST scheme 1 will be mainly described below, but the first embodiment may be employed in HST scheme 2/HST NW pre-compensation scheme. That is, in the first embodiment, HST scheme 1, HST scheme 2, and HST NW pre-compensation scheme may be interchangeably interpreted.

A UE may follow any one of aspect 1-1 to aspect 1-2 below.

### <<Aspect 1-1>>

For the HST scheme (HST scheme 1/HST scheme 2/HST NW pre-compensation scheme), two TCI states are configured/indicated.

For each of TCI codepoints (codepoints of a TCI field, DCI codepoints), one or two TCI states can be configured/indicated. A method of indicating the TCI state may use an RRC information element/MAC CE (for example, an Enhanced TCI States Activation/Deactivation for UE-specific PDSCH MAC CE)/DCI (TCI field) in a manner similar to that of single DCI-based multiple TRPs in Rel. 16.

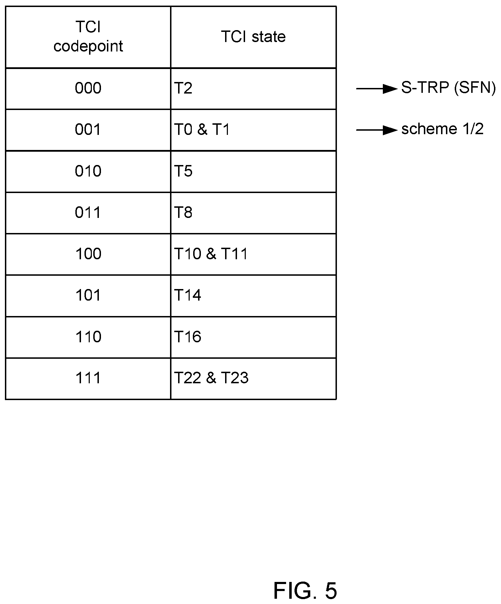

In an example of FIG. 5, the MAC CE indicates (maps) one or two TCI states for each TCI codepoint. The TCI field (in, for example, DCI format 1_1/1_2) indicates one or two TCI states by indicating a TCI codepoint.

When one TCI state is indicated (for example, when TCI codepoint 000 of this example is indicated), the UE may operate (for example, PDSCH reception) in accordance with the single TRP (SFN).

When two TCI states are indicated (for example, when TCI codepoint 001 of this example is indicated), the UE may operate (for example, PDSCH reception) in accordance with HST scheme 1.

When HST scheme 1 is configured (or when a plurality of TRS resources are configured) by higher layer signaling, the UE may measure each TRS resource. When use of a plurality of TCI states in PDSCH/PDCCH reception is indicated, the UE may operate (for example, PDSCH reception) in accordance with HST scheme 1. In HST scheme 1, the UE may measure a plurality of Doppler shifts in a plurality of TRSs, and may receive/detect a PDSCH on the basis of a result of the measurement.

One or two TCI states may be mapped to each TCI codepoint. Two TCI states may always be mapped to each TCI codepoint, and the two TCI states (IDs) may be equal. Two TCI states may always be mapped to each TCI codepoint, and the two TCI states (IDs) may be different from each other.

When two TCI states indicated by the TCI field are equal, the UE may operate (for example, PDSCH reception) in accordance with the single TRP (SFN).

When two TCI states indicated by the TCI field are equal (or different from each other), the UE may operate (for example, PDSCH reception) in accordance with the HST scheme (HST scheme 1/HST scheme 2/HST NW pre-compensation scheme). In this case, the TCI states may be equal between two TRSs.

### <<Variations of Aspect 1-1>>

For HST scheme 1/2, two TCI states are configured/indicated.

DCI may explicitly indicate whether the single TRP (SFN) is used. A TCI codepoint/field to indicate whether the single TRP (SFN) is used may be defined in usage, or may be indicated by higher layer signaling (RRC information element/MAC CE).

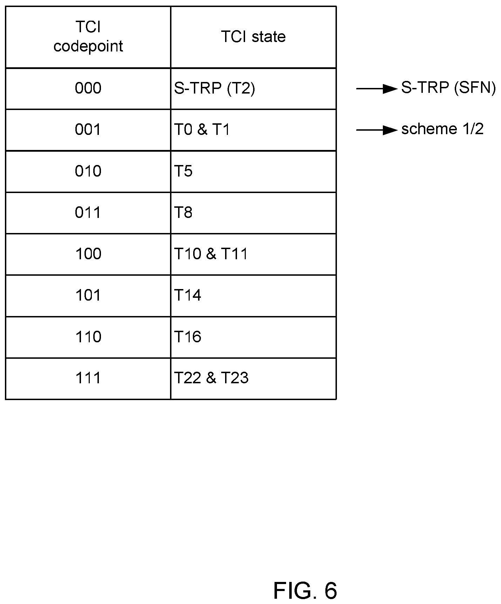

In an example of FIG. 6, a case that the lowest TCI codepoint (for example, 000) uses the single TRP (SFN) may be defined in specifications, or that mapping may be indicated by the MAC CE. One TCI state for the single TRP may be mapped to this TCI codepoint by the MAC CE.

### <<Aspect 1-2>>

Which scheme out of the single TRP/HST scheme 1/HST scheme 2/HST NW pre-compensation scheme is applied depends on scheduling DCI (PDCCH).

The scheme may depend on a DCI format. When a DCI format to schedule the PDSCH is DCI format 1_1/1_2, the UE may operate (for example, PDSCH reception) in accordance with HST scheme 1. When the DCI format to schedule the PDSCH is DCI format 1_0, the UE may operate (for example, PDSCH reception) in accordance with the single TRP (SFN).

The scheme may depend on a Radio Network Temporary Identifier (RNTI) used for the DCI (CRC scrambling for the DCI). An HST RNTI may be defined in specifications. The UE may switch the scheme depending on an RNTI to scramble a CRC for DCI to schedule the PDSCH. When the PDSCH is scheduled by DCI having a CRC scrambled by the HST RNTI, the UE may operate (for example, PDSCH reception) in accordance with a specific scheme (for example, HST scheme 1).

The scheme may depend on a combination of a plurality of DCI fields. When respective values of a plurality of special fields are special values defined in the specifications, the UE may operate (for example, PDSCH reception) in accordance with a specific scheme (for example, HST scheme 1).

The scheme may depend on a CORESET in which DCI (PDCCH) to schedule the PDSCH is received. When the DCI to schedule the PDSCH is received in a UE-specific CORESET, the UE may operate (for example, PDSCH reception) in accordance with a first scheme (for example, HST scheme 1). When the DCI to schedule the PDSCH is received in a common CORESET, the UE may operate (for example, PDSCH reception) in accordance with a second scheme (for example, the single TRP (SFN)).

The scheme may depend on a search space in which DCI (PDCCH) to schedule the PDSCH is received. When the DCI to schedule the PDSCH is received in a UE-specific search space (USS), the UE may operate (for example, PDSCH reception) in accordance with a first scheme (for example, HST scheme 1). When the DCI to schedule the PDSCH is received in a common search space (CSS), the UE may operate (for example, PDSCH reception) in accordance with a second scheme (for example, the single TRP (SFN)).

According to this embodiment, a base station/UE can dynamically switch between the single TRP (SFN) and HST scheme 1/HST scheme 2/HST NW pre-compensation scheme.

### <Second Embodiment>

Dynamic switching between a single TRP (SFN) and an HST NW pre-compensation scheme may be performed. That is, the first embodiment may be employed in switching between the single TRP (SFN) and the HST NW pre-compensation scheme.

A UE may assume that in the HST NW pre-compensation scheme, a receive signal is frequency-compensated in PDSCH reception for the UE to which a TCI state has been notified.

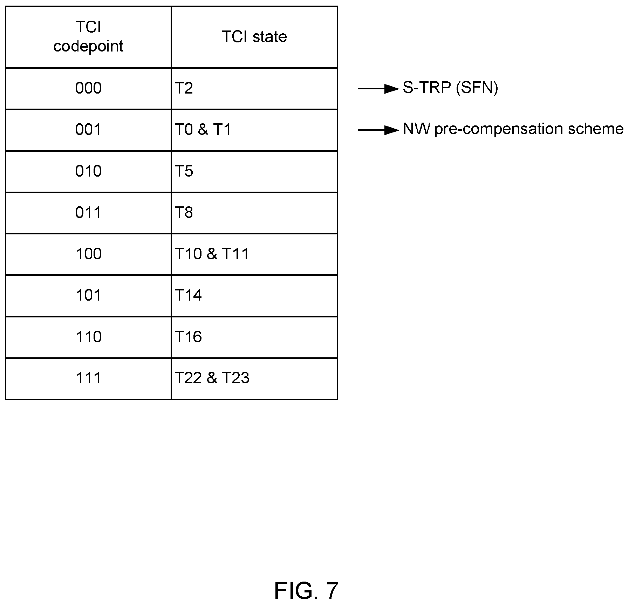

In an example of FIG. 7, a MAC CE indicates (maps) one or two TCI states for each TCI codepoint. The TCI field (in, for example, DCI format 1_1/1_2) indicates one or two TCI states by indicating a TCI codepoint.

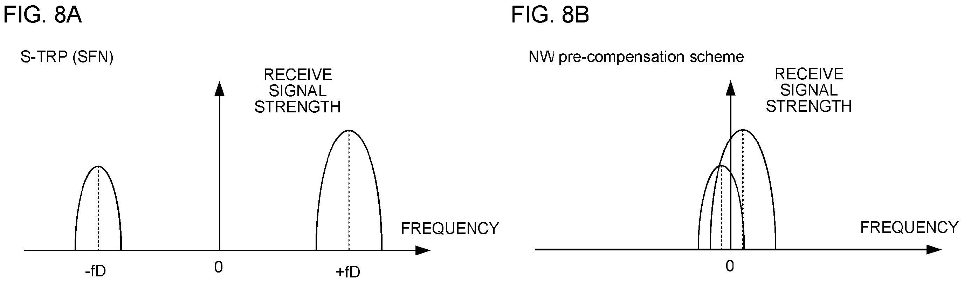

When one TCI state is indicated (for example, when TCI codepoint 000 of this example is indicated), the UE may operate in accordance with the single TRP (SFN), and may assume that a nonfrequency-compensated PDSCH/DMRS is received (FIG. 8A) (may not assume that a frequency-compensated PDSCH/DMRS is received).

When two TCI states are indicated (for example, when TCI codepoint 001 of this example is indicated), the UE may operate in accordance with HST scheme 1, and may assume that a frequency-compensated PDSCH/DMRS is received (FIG. 8B).

According to this embodiment, a base station/UE can dynamically switch between the single TRP (SFN) and the HST NW pre-compensation scheme.

### <Third Embodiment>

Dynamic switching between HST scheme 1/2 and an HST NW pre-compensation scheme may be performed.

A case where a third embodiment is employed in switching between HST scheme 1/2 and the HST NW pre-compensation scheme will be described below, but the third embodiment may be employed in at least two of HST scheme 1, HST scheme 2, and the HST NW pre-compensation scheme. That is, in the third embodiment, HST scheme 1, HST scheme 2, and HST NW pre-compensation scheme may be interchangeably interpreted.

Which of HST scheme 1/2 and HST NW pre-compensation scheme is used may depend on TCI codepoints.

A UE may follow at least one of aspect 3-1 and aspect 3-2 below.

### <<Aspect 3-1>>

Which of HST scheme 1/2 and HST NW pre-compensation scheme each TCI codepoint corresponds to may be configured/indicated by higher layer signaling (RRC information element/MAC CE), or may be defined in specifications.

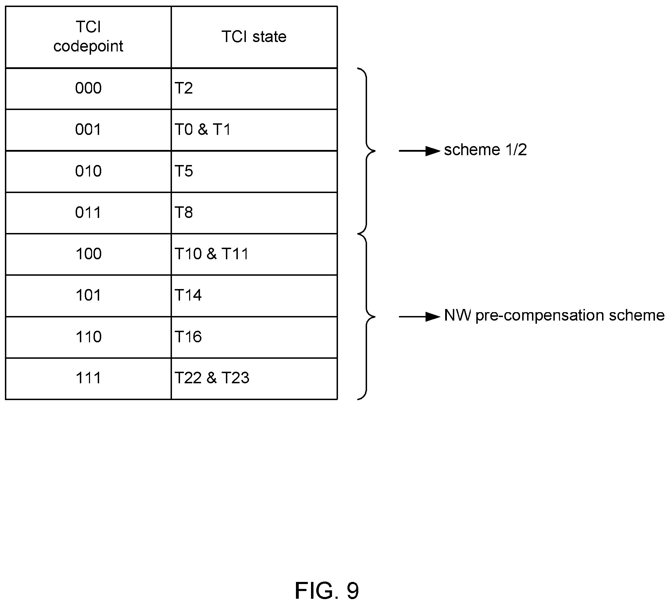

In an example of FIG. 9, TCI codepoint 000 to TCI codepoint 011 are associated with HST scheme 1/2, and TCI codepoint 100 to TCI codepoint 111 are associated with HST NW pre-compensation scheme. The UE operates (for example, PDSCH reception) in accordance with a scheme corresponding to the TCI codepoint.

There is a possibility that the HST NW pre-compensation scheme achieves the best performance when a base station can recognize an appropriate Doppler shift, otherwise performance of HST scheme 1 is higher than performance of the HST NW pre-compensation scheme. It is preferable that dynamic switching between HST scheme 1/2 and HST NW pre-compensation scheme is performed depending on a CSI report value/SRS reception state for the base station to obtain a Doppler shift.

### <<Aspect 3-2>>

Which of HST scheme 1/2 and HST NW pre-compensation scheme is used may depend on at least one of the number of TCI states associated with a TCI codepoint, a type associated with a TCI codepoint, a QCL type in a TCI state associated with a TCI codepoint, a higher layer parameter associated with a TCI state associated with a TCI codepoint, and a higher layer parameter associated with a TCI codepoint.

For example, a parameter indicating which of HST scheme 1/2 and HST NW pre-compensation scheme is used may be associated with each TCI codepoint by higher layer signaling.

For example, a QCL type in a TCI state mapped to a TCI codepoint may vary between HST scheme 1/2 and HST NW pre-compensation scheme. The UE may operate (for example, PDSCH reception) in accordance with a scheme corresponding to the QCL type in the TCI state mapped to the TCI codepoint.

According to this embodiment, a base station/UE can dynamically switch between HST scheme 1/2 and HST NW pre-compensation scheme.

### <Fourth Embodiment>

A UE may follow at least one of aspect 4-1 and aspect 4-2 below.

### <<Aspect 4-1>>

When any one of HST schemes (HST scheme 1/HST scheme 2/HST NW pre-compensation scheme) is configured, the UE uses a plurality of TCI states/QCLs for PDSCH reception.

A plurality of TCI states may be configured/indicated for each PDSCH by an RRC information element/MAC CE/DCI.

A plurality of TCI states may be configured/indicated for each PDSCH in a manner similar to that of a method for indicating a TCI state for single DCI-based multiple TRPs in Rel. 16.

One or two TCI states may be activated for each TCI codepoint by a MAC CE of Rel. 16 (for example, an Enhanced TCI States Activation/Deactivation for UE-specific PDSCH MAC CE), and one TCI codepoint may be indicated by DCI (TCI field).

If a parameter for the presence of TCI in DCI (tci-PresentInDCI) is not configured or if time offset (scheduling offset) from DCI until a PDSCH is less than a threshold value (timeDurationForQCL), the UE may operate (for example, PDSCH reception) by using at least one TCI state (default TCI state) out of TCI state 1 to TCI state 3 below.

### [TCI State 1]

The TCI state corresponds to the lowest TCI codepoint having two active TCI states (in a manner similar to that of Rel. 16).

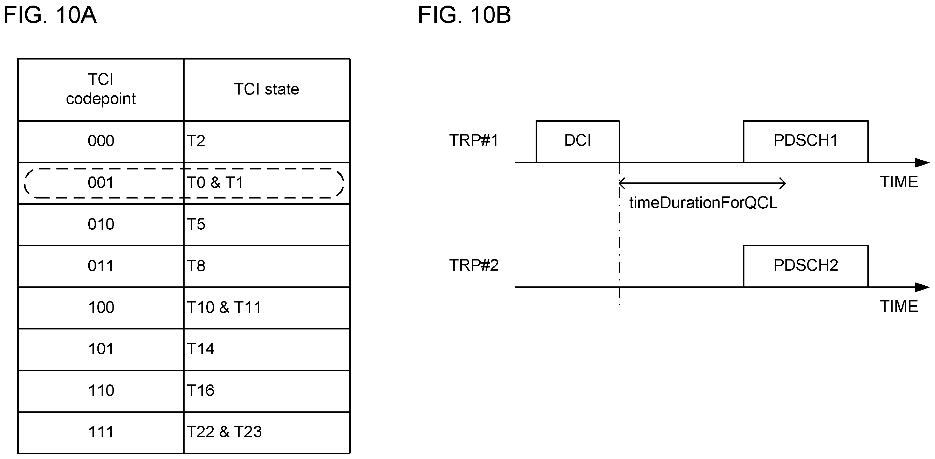

In an example of FIG. 10A, a plurality of TCI states are configured by RRC, and TCI states for respective codepoints of the TCI field are activated by a MAC CE (for example, an Enhanced TCI States Activation/Deactivation for UE-specific PDSCH MAC CE). In an example of FIG. 10B, the DCI schedules PDSCH 1 from TRP #1 and PDSCH from TRP #2. When time offset between the DCI and respective PDSCH 1 and PDSCH 2 is less than the threshold value (timeDurationForQCL), the UE uses, for receptions of PDSCH 1 and PDSCH 2, two active TCI states (T0 and T1) for the lowest codepoint (001) out of TCI codepoints having two active TCI states, respectively.

### [TCI State 2]

The TCI state is one or two active TCI states corresponding to the lowest TCI codepoint.

### [TCI State 3]

The TCI state corresponds to two active TCI state IDs (two active TCI state IDs including the lowest TCI state ID out of two active TCI states).

In order to operate a default TCI state for a PDSCH in a HST, the UE may assume that a plurality of TCI states are activated for at least one TCI codepoint. For example, in TCI state 3 mentioned above, two TCI states may always be activated for at least one TCI codepoint.

For a PDSCH scheduled by a DCI format (for example, DCI format 1_0) in which a TCI field is absent (or a TCI field is unconfigurable), the UE may assume one of scheme assumption 1 and scheme assumption 2 below.

### [Scheme Assumption 1]

The UE assumes a single TRP.

### [Scheme Assumption 2]

The UE assumes an HST scheme (HST scheme 1/HST scheme 2/HST NW pre-compensation scheme). A TCI state of this case may be the above-mentioned default TCI state.

### <<Aspect 4-2>>

When any one of the HST schemes (HST scheme 1/HST scheme 2/HST NW pre-compensation scheme) is configured/applied, the UE assumes one TCI state/QCL/spatial relation/SRI for transmission of an

### SRS/PUCCH/PUSCH.

One TCI state/QCL/spatial relation/SRI may be configured for each SRS/PUCCH/PUSCH resource by an RRC information element/MAC CE/DCI.

If a spatial relation is not configured, the spatial relation may follow spatial relation determination procedure below.

### [Spatial Relation Determination Procedure]

The UE may assume a TCI state with the lowest CORESET ID for a CC for which a CORESET is configured, and may assume a TCI state having the lowest active TCI state ID out of PDSCH TCI states for a CC for which the CORESET is not configured (in a manner similar to that of Rel. 16).

The above-mentioned "lowest active TCI state ID of the PDSCH TCI states" can be one or two active TCI states. When the "lowest active TCI state ID of the PDSCH TCI states" is two active TCI states, the UE may determine one TCI state used for a spatial relation/PL-RS in accordance with a rule. For example, this one TCI state may be the first configured TCI state, or may be a TCI state having a lower TCI state ID out of two TCI states.

If a plurality of TCI states are configurable for the CORESET, the above-mentioned "TCI state with the lowest CORESET ID" can be one or two active TCI states. When the "TCI state with the lowest CORESET ID" is one or two active TCI states, the UE may determine one TCI state used for a spatial relation/PL-RS in accordance with a rule. For example, this one TCI state may be the first configured TCI state, or may be a TCI state having a lower TCI state ID out of two TCI states.

According to this embodiment, the UE can appropriately determine a DL/UL TCI state.

### <Fifth Embodiment>

In Rel. 16, scheme 1a (repetition scheme 1a) has been defined for multiple TRPs for URLLC. Repetition scheme 1a is similar to NCJT in enhanced Mobile Broadband (eMBB), but transmits a common CW by using respective PDSCHs for different two MIMO layers. Transmitting one piece of data from two TRPs by using SDM improves reliability for a single TRP.

For HST schemes (HST scheme 1/HST scheme 2/HST NW pre-compensation scheme), when the same DMRS port is associated with two TCI states including TRSs as source RSs, at least one of variations A, B, C, and E below may be supported.
[Variation A] One of the two TCI states is associated with {average delay, delay spread}, and the other is associated with QCL type A {average delay, delay spread, Doppler shift, Doppler spread}.
[Variation B] One of the two TCI states is associated with {average delay, delay spread}, and the other is associated with QCL type B {Doppler shift, Doppler spread}.
[Variation C] One of the two TCI states is associated with {delay spread}, and the other is associated with QCL type A {average delay, delay spread, Doppler shift, Doppler spread}.
[Variation E] Both of the two TCI states are associated with QCL type A {average delay, delay spread, Doppler shift, Doppler spread}.

Variation E may be employed in HST scheme 1. In other words, two TCI states for a DMRS port for the PDSCH include QCL type A. The two TCI states may include QCL type A and QCL type D.

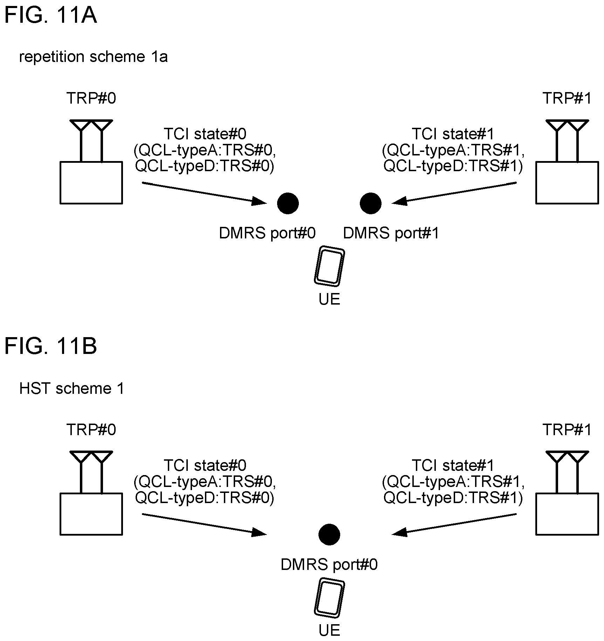

In Rel. 16, two TCI states configured/indicated for the PDSCH are TCI states for respective DMRS ports, and a different TRP is used for each MIMO layer (see FIG. 11A). Each of the two TCI states indicates a channel characteristics-related relationship between DMRS reception and another DL-RS (for example, TRS). In this case, a respective plurality of DMRS ports have a plurality of different TCI states (correspond to a plurality of different TCI states or are QCLed with a plurality of different DL-RSs).

In HST scheme 1 (Rel. 17 (or later versions)), two TCI states configured/indicated for the PDSCH are TCI states for an identical DMRS port (see FIG. 11B). In this case, one DMRS port has a plurality of different TCI states (corresponds to a plurality of different TCI states or is QCLed with a plurality of different DL-RSs). A respective plurality of DMRS ports have a plurality of different TCI states (correspond to a plurality of different TCI states or are QCLed with a plurality of different DL-RSs).

Thus, the meaning of the two indicated TCI states varies between Rel. 16 and HST scheme 1 even if schemes for indicating the two TCI states are the same, and thus it is preferable that Rel. 16 and HST scheme 1 are distinguished from each other.

In this embodiment, in place of HST scheme 1/HST NW pre-compensation scheme, another HST scheme may be used. That is, in this embodiment, HST scheme 1/HST NW pre-compensation scheme may be interpreted as HST schemes (HST scheme 1/HST scheme 2/HST NW pre-compensation scheme).

In this embodiment, distinction between HST scheme 1 or HST NW pre-compensation scheme and repetition scheme 1 will be mentioned, but this embodiment can be employed in distinction between one HST scheme (one of HST scheme 1, HST scheme 2, and HST NW pre-compensation scheme) and another one HST scheme (another one of HST scheme 1, HST scheme 2, and HST NW pre-compensation scheme). That is, in this embodiment, repetition scheme 1a may be interpreted as one of HST scheme 1, HST scheme 2, and HST NW pre-compensation scheme.

A UE may follow at least one of aspect 5-1 to aspect 5-3 below.

### <<Aspect 5-1>>

This aspect relates to distinction between repetition scheme 1a and HST scheme 1.

When a specific condition is satisfied, a plurality of configured/indicated TCI states may correspond to an identical DMRS (DMRS port). When the specific condition is not satisfied, the plurality of configured/indicated TCI states may correspond to a respective plurality of different DMRSs (DMRS ports). The specific condition may be at least one of Condition 1 and Condition 2 below.

### [Condition 1] HST scheme 1 is configured/indicated by higher layer signaling.

When a plurality of TCI states are simultaneously indicated out of all TCI states, the plurality of TCI states may correspond to an identical DMRS. When a plurality of TCI states are simultaneously indicated out of some (specific) TCI states, the plurality of TCI states may correspond to an identical DMRS. Here, the some TCI states may be TCI states configured/indicated by the higher layer signaling. The some TCI states may be TCI states associated with one or more specific TCI codepoints.

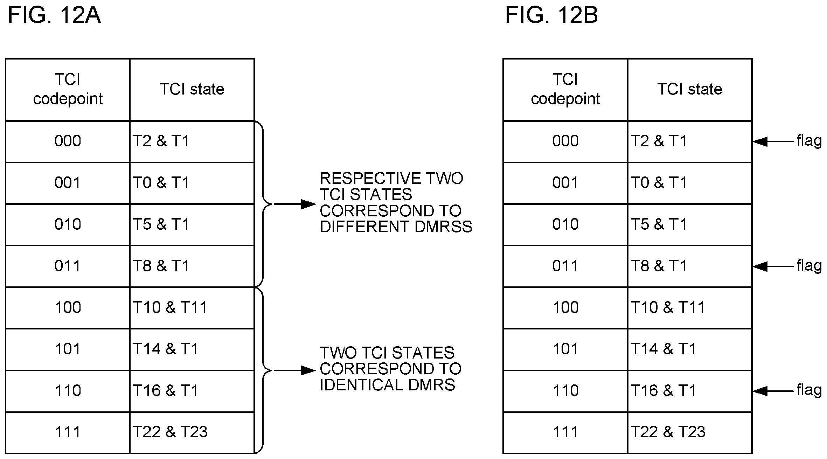

In an example of FIG. 12A, a plurality of TCI states corresponding to each of TCI codepoint 100 to TCI codepoint 111 (the above-described "some TCI states") correspond to an identical DMRS, and a respective plurality of TCI states corresponding to each of TCI codepoint 000 to TCI codepoint 011 (TCI states other than the above-described "some TCI states") correspond to different DMRSs.

[Condition 2] A flag/parameter to indicate that "a plurality of TCI states correspond to an identical DMRS" is configured/indicated for a respective plurality of TCI states.

The flag/parameter may be configured for each TCI state ID. The flag/parameter may be configured for each TCI codepoint.

In an example of FIG. 12B, the flag is configured by the higher layer signaling for TCI codepoint 000, TCI codepoint 011, and TCI codepoint 110. A plurality of TCI states corresponding to each of TCI codepoints (for which enabled/true is configured) having the flag (the above-described "some TCI states") correspond to an identical DMRS, and a respective plurality of TCI states corresponding to each of TCI codepoints (for which disabled/false is configured) not having the flag (TCI states other than the above-described "some TCI states") correspond to different DMRSs.

### <<Aspect 5-2>>

This aspect relates to distinction between repetition scheme 1a and HST NW pre-compensation scheme.

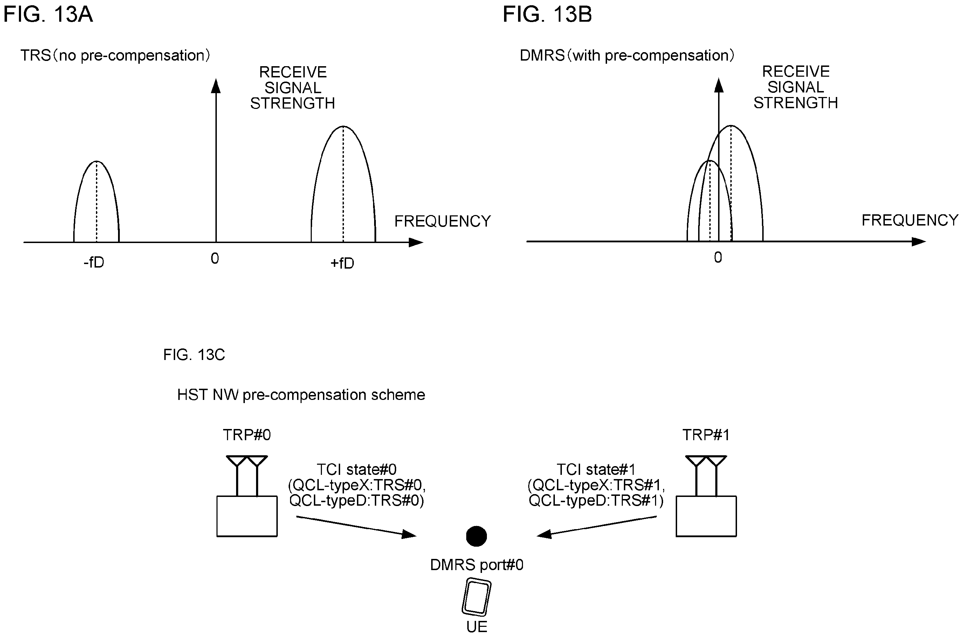

Examples of FIGS. 13A to 13C are diagrams to show an example of the HST NW pre-compensation scheme. As shown in an example of FIG. 13A, Doppler shifts of respective two TRSs (TRS #0 and TRS #1) transmitted from two TRPs (TRP #0 and TRP #1) are not precompensated, and as shown in an example of FIG. 13B, Doppler shifts of respective two DMRSs transmitted from the two TRPs are precompensated. That is, the Doppler shifts of the two DMRSs are different from the Doppler shifts of the two TRSs. Thus, a new QCL type (QCL type X) different from an existing QCL type may be defined. QCL type X may not include Doppler-related parameters (for example, Doppler shift/Doppler spread). As shown in an example of FIG. 13C, in addition to the existing QCL type (for example, QCL type D), QCL type X may be configured for respective TCI states.

When a specific condition is satisfied, the UE may ignore (may not consider) some (specific) parameters for QCL (some QCL parameters). When the specific condition is not satisfied, the UE may consider the parameters. The specific condition may be at least one of Condition 1 and Condition 2 below.

### [Condition 1] The HST NW pre-compensation scheme is configured/indicated by higher layer signaling.

The UE may ignore the some parameters for QCL in all TCI states. The UE may ignore the some parameters for QCL in some (specific) TCI states. Here, the some TCI states may be TCI states configured/indicated by the higher layer signaling. The some TCI states may be TCI states associated with one or more specific TCI codepoints.

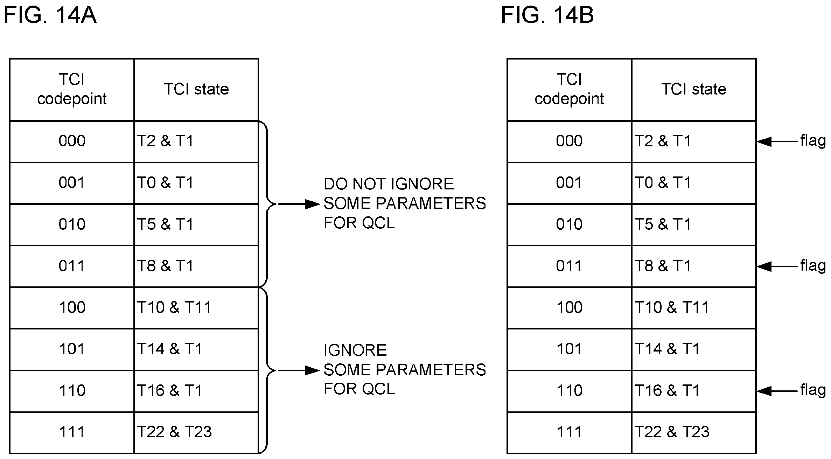

In an example of FIG. 14A, the UE ignores some parameters for QCL in a plurality of TCI states corresponding to each of TCI codepoint 100 to TCI codepoint 111 (the above-described "some TCI states"), and the UE considers the parameters in a plurality of TCI states corresponding to each of TCI codepoint 000 to TCI codepoint 011 (TCI states other than the above-described "some TCI states").

### [Condition 2] A flag/parameter to indicate that "some parameters for QCL are ignored" is configured/indicated for a respective plurality of TCI states.

The flag/parameter may be configured for each TCI state ID. The flag/parameter may be configured for each TCI codepoint.

In an example of FIG. 14B, the flag is configured by the higher layer signaling for TCI codepoint 000, TCI codepoint 011, and TCI codepoint 110. The UE ignores some parameters for QCL in a plurality of TCI states corresponding to each of TCI codepoints (for which enabled/true is configured) having the flag (the above-described "some TCI states"), and the UE considers the parameters in a plurality of TCI states corresponding to each of TCI codepoints (for which disabled/false is configured) not having the flag (TCI states other than the above-described "some TCI states").

### <<Aspect 5-3>>

Switching between repetition scheme 1a and HST scheme 1 may be at least one of switching method 1 and switching method 2 below. In this aspect, HST scheme 1 may be interpreted as an HST scheme or HST scheme 2/HST NW pre-compensation scheme.

### [Switching Method 1]

Switching between repetition scheme 1a and HST scheme 1 is performed by higher layer signaling (RRC information element/MAC CE) .

### [Switching Method 2]

Switching between repetition scheme 1a and HST scheme 1 is performed by DCI. The UE to support dynamic switching between repetition scheme 1a and HST scheme 1 (UE that has reported a UE capability indicating that the dynamic switching is supported) may perform switching between repetition scheme 1a and HST scheme 1 by using the DCI. At least one of the first to fourth embodiments may be employed in the dynamic switching between repetition scheme 1a and HST scheme 1. That is, in at least one of the first to fourth embodiments, the single TRP (SFN)/HST scheme 1/HST scheme 2/HST NW pre-compensation scheme may be interpreted as repetition scheme 1a and HST scheme 1.

According to this embodiment, the UE can appropriately perform any one of repetition scheme 1a and the HST scheme.

### <Sixth Embodiment>

In Rel. 16, one or two TCI states are activated (mapped) for each TCI codepoint by using a MAC CE (Enhanced TCI States Activation/Deactivation for UE-specific PDSCH MAC CE) for repetition scheme 1a. When the same MAC CE is used for HST scheme 1, it is necessary that repetition scheme 1a and HST scheme 1 are distinguished from each other.

In this embodiment, in place of HST scheme 1, another HST scheme may be used. That is, in this embodiment, HST scheme 1 may be interpreted as an HST scheme (HST scheme 1/HST scheme 2/HST NW pre-compensation scheme).

In this embodiment, distinction between HST scheme 1 or HST NW pre-compensation scheme and repetition scheme 1 will be mentioned, but this embodiment can be employed in distinction between one HST scheme (one of HST scheme 1, HST scheme 2, and HST NW pre-compensation scheme) and another one HST scheme (another one of HST scheme 1, HST scheme 2, and HST NW pre-compensation scheme). That is, in this embodiment, repetition scheme 1a may be interpreted as one of HST scheme 1, HST scheme 2, and HST NW pre-compensation scheme.

A UE may follow at least one of aspect 6-1 to aspect 6-3 below.

### <<Aspect 6-1>>

A new DCI field for dynamic switching may be defined. DCI overhead increases, but the UE can certainly switch a scheme.

When dynamic switching between repetition scheme 1a and HST scheme 1 is configured by higher layer signaling, the new DCI field is present (added) in PDSCH scheduling DCI (for example, DCI format 1_1/1_2). For example, when a value of the new DCI field is 0, the UE uses repetition scheme 1a, and when the value of the new DCI field is 1, the UE uses HST scheme 1.

### <<Aspect 6-2>>

Which scheme out of repetition scheme 1a and HST scheme 1 is applied depends on scheduling DCI (PDCCH).

The scheme may depend on a DCI format. At least one of a DCI format corresponding to repetition scheme 1a and a DCI format corresponding to HST scheme 1 may be defined in specifications, or may be configured by higher layer signaling.

The scheme may depend on an RNTI used for the DCI (CRC scrambling for the DCI). At least one of an RNTI corresponding to repetition scheme 1a and an RNTI corresponding to HST scheme 1 may be defined in specifications, or may be configured by higher layer signaling. When a PDSCH is scheduled by DCI having a CRC scrambled by an RNTI corresponding to a specific scheme (one of repetition scheme 1a and HST scheme 1), the UE may operate (for example, PDSCH reception) in accordance with a specific scheme.

The scheme may depend on a combination of a plurality of DCI fields. When respective values of a plurality of special fields are special values defined in the specifications, the UE may operate (for example, PDSCH reception) in accordance with a specific scheme (one of repetition scheme 1a and HST scheme 1).

The scheme may depend on a CORESET in which DCI (PDCCH) to schedule the PDSCH is received. When the DCI to schedule the PDSCH is received in a UE-specific CORESET, the UE may operate (for example, PDSCH reception) in accordance with a first scheme (one of repetition scheme 1a and HST scheme 1). When the DCI to schedule the PDSCH is received in a common CORESET, the UE may operate (for example, PDSCH reception) in accordance with a second scheme (the other of repetition scheme 1a and HST scheme 1).

The scheme may depend on a search space in which DCI (PDCCH) to schedule the PDSCH is received. When the DCI to schedule the PDSCH is received in a UE-specific search space (USS), the UE may operate (for example, PDSCH reception) in accordance with a first scheme (one of repetition scheme 1a and HST scheme 1). When the DCI to schedule the PDSCH is received in a common search space (CSS), the UE may operate (for example, PDSCH reception) in accordance with a second scheme (the other of repetition scheme 1a and HST scheme 1).

### <<Aspect 6-3>>

Following the fifth embodiment can distinguish which of repetition scheme 1a and the HST scheme each TCI state is used for.

One or two TCI states can be configured/indicated/mapped/activated for each TCI codepoint. For this configuration/indication/mapping/activation, a MAC CE of Rel. 16 (for example, an Enhanced TCI States Activation/Deactivation for UE-specific PDSCH MAC CE) may be used.

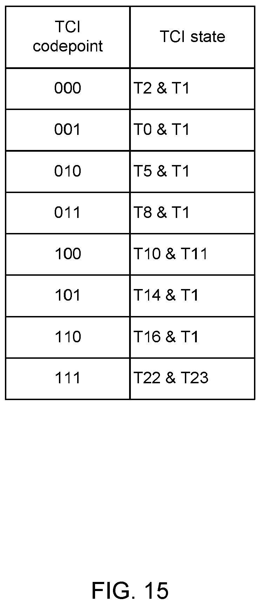

A TCI field in DCI (for example, DCI format 1_1/1_2) indicates one or two TCI states in accordance with mapping in an example of FIG. 15.

When one TCI state is indicated (for example, when TCI codepoint 000 of this example is indicated), the UE may operate (for example, PDSCH reception) in accordance with the single TRP (SFN).

When two TCI states are indicated (for example, when TCI codepoint 001 of this example is indicated), the UE may operate (for example, PDSCH reception) in accordance with HST scheme 1 or repetition scheme 1a.

Which of HST scheme 1 and repetition scheme 1a is applied will be mentioned below.

When HST scheme 1 or repetition scheme 1a is configured (or when a plurality of TRS resources are configured) by higher layer signaling, the UE may measure each TRS resource. When use of a plurality of TCI states in PDSCH/PDCCH reception is indicated, the UE may operate (for example, PDSCH reception) in accordance with HST scheme 1 or repetition scheme 1a. In HST scheme 1 or repetition scheme 1a, the UE may measure a plurality of Doppler shifts in a plurality of TRSs, and may receive/detect a PDSCH on the basis of a result of the measurement.

One or two TCI states may be mapped to each TCI codepoint. Two TCI states may always be mapped to each TCI codepoint, and the two TCI states (IDs) may be equal. Two TCI states may always be mapped to each TCI codepoint, and the two TCI states (IDs) may be different from each other.

When two TCI states indicated by the TCI field are equal, the UE may operate (for example, PDSCH reception) in accordance with the single TRP (SFN).

When two TCI states indicated by the TCI field are equal (or different from each other), the UE may operate (for example, PDSCH reception) in accordance with the HST scheme (scheme 1/scheme 2/NW pre-compensation scheme) or repetition scheme 1a. In this case, the TCI states may be equal between two TRSs.

The third embodiment may be employed in relation to which of HST scheme 1 and repetition scheme 1a is applied. That is, in the third embodiment, scheme1/2 and NW pre-compensation scheme may be interpreted as an HST scheme (scheme 1/scheme 2/NW pre-compensation scheme) and repetition scheme 1a, respectively.

For TCI states for the PDSCH, which of HST scheme 1 or repetition scheme 1a each TCI state corresponds to may be configured by higher layer signaling. In each TCI state, which of HST scheme 1 or repetition scheme 1a each TCI state corresponds to may be configured.

For TCI states for the PDSCH, which of HST scheme 1 or repetition scheme 1a each TCI state ID corresponds to may be configured by higher layer signaling. Which of HST scheme 1 or repetition scheme 1a each TCI state ID corresponds to may be configured outside of each TCI state parameter. Which of HST scheme 1 or repetition scheme 1a each TCI state ID corresponds to may be associated with each TCI state ID.

For TCI states for the PDSCH, which of HST scheme 1 or repetition scheme 1a each TCI state corresponds to may be configured by higher layer signaling. In each TCI state, which of HST scheme 1 or repetition scheme 1a each TCI state corresponds to may be configured.

In HST scheme 1, two TCI states may be configured/indicated for one DMRS of the PDSCH. In repetition scheme 1a, one TCI state may be configured/indicated for one DMRS of the PDSCH. With use of this difference, the UE may judge which scheme out of HST scheme 1 and repetition scheme 1a an indicated TCI state corresponds to. Specifically, a new QCL type (for example, QCL type X) is defined for HST scheme 1, and the UE may judge, on the basis of a QCL type of an indicated TCI state, which scheme the TCI state corresponds to (in a manner similar to that of the fifth embodiment). The UE may judge, on the basis of whether a higher layer parameter indicating that some parameters for QCL of Rel. 16 are ignored has been configured for a TCI state, which scheme the TCI state corresponds to (in a manner similar to that of the fifth embodiment).

### <Other Embodiment>

A higher layer parameter (RRC IE)/UE capability corresponding to a function (characteristic, feature) in at least one of the above plurality of embodiments may be defined. The UE capability may indicate that this function is supported.

A UE for which the higher layer parameter (for enabling the function) corresponding to the function has been configured may perform the function. A "case that a UE for which the higher layer parameter corresponding to the function has not been configured does not perform the function (for example, follows Rel. 15/16)" may be defined.

A UE that has reported the UE capability indicating that the function is supported may perform the function. A "case that a UE that has not reported the UE capability indicating that the function is supported does not perform the function (for example, follows Rel. 15/16)" may be defined.

When the UE has reported the UE capability indicating that the function is supported, and the higher layer parameter corresponding to the function has been configured for the UE, the UE may perform the function. A "case that when a UE does not report the UE capability indicating that the function is supported or when the higher layer parameter corresponding to the function is not configured for the UE, the UE does not perform the function (for example, follows Rel. 15/16)" may be defined.

The UE capability may indicate whether the UE supports this function.

The UE capability may indicate whether to support an HST (HST scheme).

The UE capability may indicate whether to support scheme 1/scheme 2/NW pre-compensation scheme.

The UE capability may indicate a maximum number of QCLs configured for an identical DMRS port.

In at least one of the above plurality of embodiments, the maximum number of QCLs configured for the identical DMRS port may be 2. In specifications, the maximum number of QCLs configured for the identical DMRS port may be greater than 2.

Scheme 1/scheme 2/NW pre-compensation scheme may be defined in the specifications, and scheme indication/switching may be performed by an RRC information element/MAC CE/DCI.

If a UE does not support dynamic switching between an HST scheme (scheme 1/scheme 2/NW pre-compensation scheme) and a single TRP (SFN), the switching between the HST scheme and the single TRP may be performed by an RRC information element/MAC CE. A case that "the UE does not support the dynamic switching between the HST scheme and the single TRP," a case that the UE does not report a UE capability related to the dynamic switching, and a case that the dynamic switching is not defined in the specifications may be interchangeably interpreted.

A UE for which the HST scheme (scheme 1/scheme 2/NW pre-compensation scheme) has been configured/indicated may follow at least one of TCI state assumption 1 to TCI state assumption 3 below.

### [TCI State Assumption 1]

The UE does not assume that different numbers of (active) TCI states are configured/indicated/mapped for a plurality of TCI codepoints. Alternatively, more than one active TCI state is notified/configured/mapped for any TCI codepoint.

### [TCI State Assumption 2]

The UE does not assume that a PDSCH is scheduled by a DCI format (for example, DCI format 1_0) incapable of indicating TCI states (not having a TCI field). Alternatively, the UE is allowed to receive a DCI format (for example, DCI format 1_0) incapable of indicating TCI states, and the UE ignores the DCI format incapable of indicating TCI states.

### [TCI State Assumption 3]

The UE receives a PDSCH scheduled by a DCI format (for example, DCI format 1_0) incapable of indicating TCI states (not having a TCI field) by using an HST scheme (HST scheme 1/HST scheme 2/HST NW pre-compensation scheme). For example, the UE may receive the PDSCH by using scheme assumption 2 of aspect 4-1.

According to the above embodiment, the UE can achieve the above-described function while maintaining compatibility with existing specifications.

In the above respective embodiments, repetition scheme 1a, HST scheme 1, HST scheme 2, HST NW pre-compensation scheme, and HST scheme may be interchangeably interpreted.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

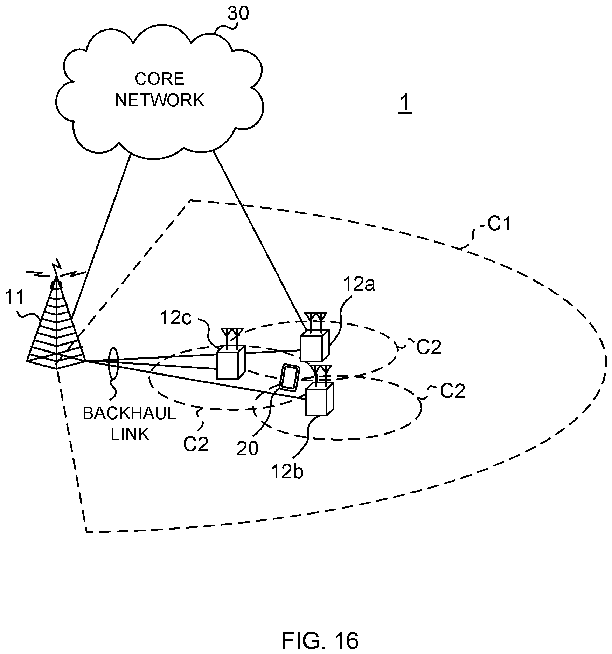

FIG. 16 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

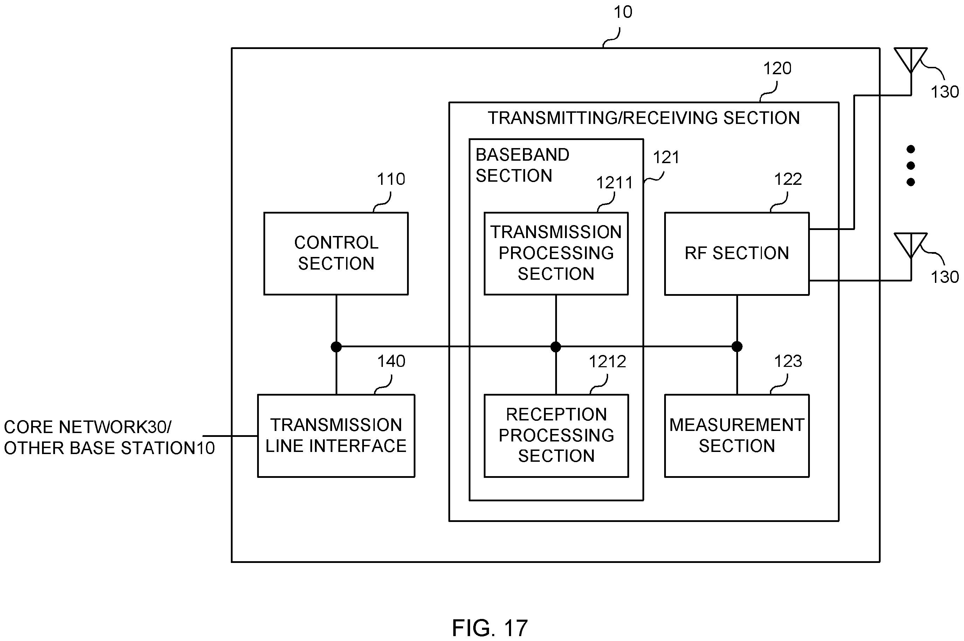

FIG. 17 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may determine downlink control information to schedule a physical downlink shared channel. The transmitting/receiving section 120 may transmit the downlink control information based on which of a repetition scheme (for example, repetition scheme 1a) and a scheme for high-speed movement (for example, HST scheme 1, HST scheme 2, HST NW pre-compensation scheme, or HST scheme) is applied to the physical downlink shared channel.

### (User Terminal)

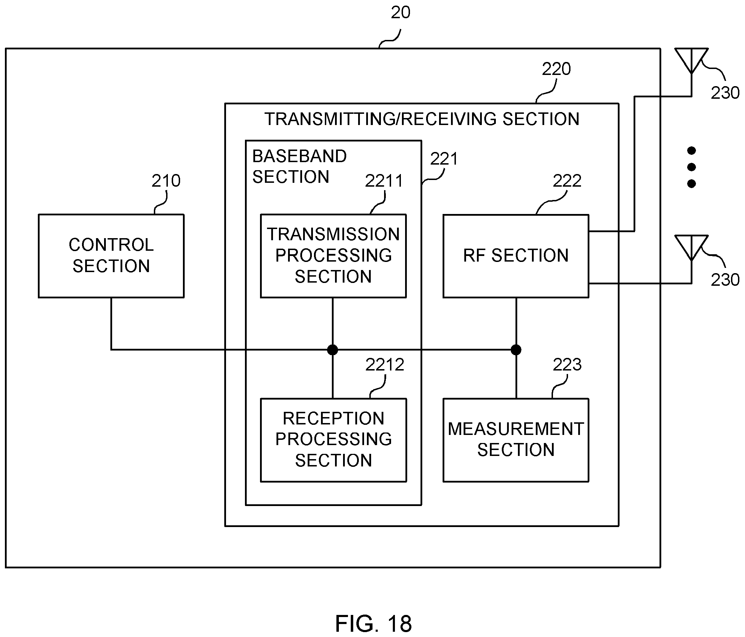

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive downlink control information (DCI, PDCCH) to schedule a physical downlink shared channel (PDSCH). The control section 210 may determine, on the basis of the downlink control information, which of a repetition scheme and a scheme for high-speed movement is applied to the physical downlink shared channel.

The control section 210 may determine, on the basis of a transmission configuration indication (TCI) state indicated by the downlink control information, which of the repetition scheme and the scheme for high-speed movement is applied to the physical downlink shared channel.

When the scheme for high-speed movement is applied to the physical downlink shared channel, TCI states indicated by the downlink control information may be associated with an identical demodulation reference signal port.

When the scheme for high-speed movement is applied to the physical downlink shared channel, a quasi-co-location (QCL) type in a TCI state indicated by the downlink control information may not include a Doppler shift-related parameter.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

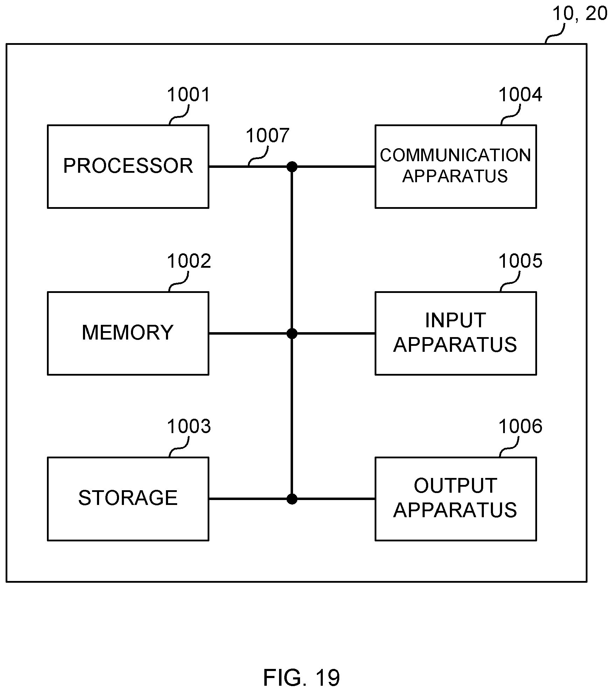

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

This application is based on Japanese Patent Application No. 2021-016826 filed on February 4, 2021. The entire contents of the application are herein incorporated.

## Claims

1. A terminal comprising:
a receiving section that receives downlink control information to schedule a physical downlink shared channel; and
a control section that determines, on the basis of the downlink control information, which of a repetition scheme and a scheme for high-speed movement is applied to the physical downlink shared channel.

2. The terminal according to claim 1, wherein
the control section determines, on the basis of a transmission configuration indication (TCI) state indicated by the downlink control information, which of the repetition scheme and the scheme for high-speed movement is applied to the physical downlink shared channel.

3. The terminal according to claim 1 or 2, wherein
when the scheme for high-speed movement is applied to the physical downlink shared channel, TCI states indicated by the downlink control information are associated with an identical demodulation reference signal port.

4. The terminal according to any one of claims 1 to 3, wherein
when the scheme for high-speed movement is applied to the physical downlink shared channel, a quasi-co-location (QCL) type in a TCI state indicated by the downlink control information does not include a Doppler shift-related parameter.

5. A radio communication method for a terminal, the radio communication method comprising:
receiving downlink control information to schedule a physical downlink shared channel; and
determining, on the basis of the downlink control information, which of a repetition scheme and a scheme for high-speed movement is applied to the physical downlink shared channel.

6. A base station comprising:
a control section that determines downlink control information to schedule a physical downlink shared channel; and
a transmitting section that transmits the downlink control information based on which of a repetition scheme and a scheme for high-speed movement is applied to the physical downlink shared channel.
